(19) Europäisches Patentamt

European Patent Office

Office européen des brevets

(11) **EP 2 051 473 B1**

(12) **EUROPEAN PATENT SPECIFICATION**

(45) Date of publication and mention
of the grant of the patent:
**25.04.2018 Bulletin 2018/17**

(51) Int Cl.:
***H04L 29/06*** *(2006.01)*

(21) Application number: **07118890.8**

(22) Date of filing: **19.10.2007**

(54) **METHOD AND SYSTEM TO TRACE THE IP TRAFFIC BACK TO THE SENDER OR RECEIVER OF USER DATA IN PUBLIC WIRELESS NETWORKS**

VERFAHREN UND SYSTEM ZUR RÜCKVERFOLGUNG EINES IP-VERKEHRS ZUM SENDER ODER EMPFÄNGER VON BENUTZERDATEN IN ÖFFENTLICHEN DRAHTLOSEN NETZWERKEN

PROCÉDÉ ET SYSTÈME POUR SUIVRE LE TRAFIC IP DEPUIS L'ÉMETTEUR OU LE RÉCEPTEUR DE DONNÉES D'UTILISATEUR DANS DES RÉSEAUX SANS FIL PUBLICS

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**22.04.2009 Bulletin 2009/17**

(73) Proprietor: **Deutsche Telekom AG**
**53113 Bonn (DE)**

(72) Inventors:
• **Solarski, Marcin**
**10553 Berlin (DE)**
• **Vidales, Pablo**
**10437 Berlin (DE)**
• **Zerfos, Petros**
**New York, NY 10128 (US)**
• **Singh, Jatinder Pal**
**Mountain View, CA 94040 (US)**

(74) Representative: **Vossius & Partner**
**Patentanwälte Rechtsanwälte mbB**
**Siebertstrasse 3**
**81675 München (DE)**

(56) References cited:
**WO-A1-2006/118497      US-A1- 2003 005 092**
**US-A1- 2005 198 534      US-A1- 2006 068 799**

## Description

Field of the Invention

User traceability is a network property to support identification of the sender or receiver of a given data unit captured by the network. Traceability is very often mandatory for Internet Service Providers (ISPs) due to different legal and regulatory requirements in many countries. Similar requirements apply to the operators of hot spots or public wireless access networks, who manage their networks and grant their subscribers access to the Internet.

Even a bigger challenge is user traceability in a new type of public access networks, where the network ownership is decentralized and the network management may be done by multiple organisations or even partially by subscribers, who are members of access sharing communities. Following the peer-to-peer spirit, individual users share their subscribed broadband access over their private wireless routers, under the supervision of a single authority entity. The increasing distribution of control over the network that arises from (1) the fragmentation of the network ownership, (2) relaxation of legal bindings on the co-operators of such unlicensed and non-regulated access networks, and (3), easier physical access to wireless access points that are part of the access network, are the key risk sources that make secure and reliable, traceability difficult. Traceability is especially important in such networks as the operators running hots spots to protect the private user from legal problems when sharing his DSL line with public HotSpot users.

The primary use case for traceability is as follows: an authenticated user is granted access to the publicly available network in order to access Internet services through a device, which is attached to a wireless access point. At the same time, the access point is a home gateway, which is also used by a household that leases the broadband connection from an ISP. The usage data is stored by the operator of such a network for accounting, usage analysis and administrative purposes. In particular, the stored usage records are used to trace, or refer back to, the user who sent or received the data.

Background of the Invention

Traceability is enabled by authentication and accounting in access networks. In broadband dial-up access networks, the authentication methods used by ISPs for their subscribers are performed on the data link layer to authenticate the residential home gateway or individual terminals in the household {PPPoA arch}. The most common authentication protocols are CHAP{RFC1994} or PAP{RFC1334}, which are used when establishing a PPP{RFC16611} session between the Customer Premise Equipment, CPE, hereafter referred to as home or residential gateway, or simply router, and the counterpart in the ISP's access network, like DSLAM in the case of DSL networks. For every PPP-session the accounting is provided using the RADIUS{RFC2865} protocol. All users behind one CPE have to use one IP address that is visible to the access network. Consequently, Network Address Translation (NAT) must be used on the CPE to handle multiple users sharing one CPE and one IP address. Due to the fact that one CPE is assigned only one IP address and, as consequence, can only established one PPP-session and per-link session accounting, the ISP cannot identify, neither trace, different users sharing access over one CPE. Hence, traceability is limited - a given user data unit can, here an IP packet, be traced back only for the ISP subscriber who leases a broadband line from/to which the user data unit was sent.

In enterprise networks, IEEE 802.1X{802.1X-2004} standard is a common choice for port-based network access control. In this interoperable security framework, different authentication protocols are available to perform the authentication of client stations, like EAP-MD5, EAP-TLS, EAP-TTLS or LEAP (US Patent 7,181,530). The authentication server is often RADIUS in this setting, as well. The above methods are designed to handle client station authentication (and access points in the case of LEAP) in semi-open or enterprise wireless networks.

In US Patent 7,251,733 a secure method for transferring accounting information is described, where the accounting records are related to the traffic generated by a user in a local area network. It is assumed that there is no trust between the service provider, whose network is currently used by the user, and the user's home operator who bills the user for utilized services. The method handles neither the user traceability nor management of client station network addresses.

In US Patent 7,089,415, a generic architecture is described, which provides authentication of various users and negotiation for services with service providers on behalf of the system users. Users are given a variety of choices of different service levels that they can use for accessing the Internet. The service levels can vary in such things as bandwidth allocation and security measures. This known method deals with correlating the users identities to the given user data.

A method and apparatus for authenticating the identities of network devices within a telecommunications network is disclosed in US Patent 7,240,364. In particular, multiple identifiers associated with a network device are retrieved from and used to identify the network device. Use of multiple identifiers provides fault tolerance and supports full modularity of hardware within a network device. This identification method is applied to network devices and does not address identification of users having access to the same network devices.

In a research report {Mårtensson B., Chevul S. et al: SuxNet - Implementation of Secure Authentication for WLAN. Blekinge Institute of Technology, Research Report No 2003:03, http://www.bth.se/fou/forskinfo.nsf/01f1d3898cbbd490c12568160037fb62/1bba0038e7df376 ec1256dea003e4172/$FILE/Resrep_0303.pdf}, the details of getting Internet access using an 802.1X enabled access point to a wireless public network are described. After successful user authentication, the user's wireless client is granted access to the network by changing the firewall rules on the access point (AP). Usage accounting involves by collecting username, user device's MAC address and start and end time stamps of the user session. The access point in this scenario is not enabled with NAT and the architecture does not provide any mechanism for searching user session data.

A system for tracing leaked data, a hacker or an illegal user on the Internet is disclosed in KR 20040110667. In a classified data, a trace back module is inserted to collect and transmit the location information while the subject is viewing or executing data without permission. This system applies to the data rather than to the network access and it is based on modifying the data itself.

Patent KR 20040076037 discloses a system and method for tracing a stolen network equipment by using the specific information of a Network Interface Card (NIC). A stolen network equipment can be traced by letting the network equipment report its unique information stored in the NIC and checking it against the network information data base storing the ownership data of the network equipment. This known method validates whether a piece of network equipment is authorized to connect to the given ISP network; no equipment usage history is considered in this process.

US 2006/068799 A1 relates to an "open host" wireless access system including a wireless access point that identifies the SSID from a WLAN connection request. A wireless service provider is associated with the SSID. The wireless provider provides IP address assignments and authentication as a native process on the network.

WO 2006/118497 A1 relates to digital communication systems in which an end user accesses the rest of the system through an Ethernet network and which includes broadband access to various services and more particular to operate a shop selection by an end user in broadband access in a digital communication system.

Summary of the Invention

This invention relates to a system and a method that supports the operator to identify a user who has access or is accessing a public wireless network. The core of this invention is a method and a system that supports the user traceability, that is a property of an access network allowing the identification of the sender or receiver of a given data unit captured by the network. The present invention applies to wireless networks following the principle of broadband sharing. Such a public wireless network has the following features:

- It is used by the ISP customer who receives the access service from the ISP and by users who connect to the CPE using the wireless interface, and are granted access by the Virtual Wireless Service Provider and not the ISP itself.
- It is built by wireless routers connected to the Internet over a broadband connection leased by an ISP customer.
- It allows sending control and user data through the same broadband connection.
- It allows all users of such a network to get access to the Internet and make use of it according to the notion of a user session. The user starts a user session whenever he gets attached to the network and successfully authenticates with the network. The user terminates a session when he explicitly logs off or the network does not detect the presence of the user device for a given period of time (timeout).
- At every user session start, the user device gets assigned, and makes use of an unique communication identifier (e.g. based on an IP address) during the session, whereas the address can be used in the network. The communication address is valid only for the period of time that the user is connected to the public wireless network and does not have a global reference in the whole network, i.e. is not globally unique.

The user identification method enables to:

- uniquely identify the user who was either a sender or a receiver of a given data unit during and after the user session,
- safely store the information about the user access details for later reference, and
- flexibly manage the length of the user access history.

The present invention is further described with reference to a particular embodiment of the above identification method, which is applied to IP networks, CPE devices enabled with 802.11a/b/g at wireless local interface and DSL line as a broadband access technology, and NAT on the CPE to support mapping of WAN addresses onto private IP addresses assigned to the users of the public wireless network. The invention can be though applied to any other access network technologies, like cable or WiMAX.

Brief Description of the Drawings

Fig. 1 shows an overview of a broadband sharing based access network in which the present invention is used;
Fig. 2 shows an example of a public user packet masquerading in a traceability system in accordance with a preferred embodiment of the invention;
Fig. 3 shows a principle of a user identification process with participation of a Virtual Wireless Internet Provider, in accordance with a preferred embodiment of the invention;

Fig. 4 shows a diagram with key architectural elements of the traceability system in the backend, in accordance with a preferred embodiment of the invention; and

Fig. 5 shows a diagram with different users accessing a virtualized residential gateway and the gateway architecture, in accordance with a preferred embodiment of the invention.

General remarks

Traceability is understood in this document as a feature of a public access network that allows to identify the user accessing the network in such a way that it is possible to trace the given user data unit (e.g. IP packets or flows) back to the originator or to the intended recipient of this data unit. Provided a sample of user data unit, a traceability mechanism applied by an Internet Service Provider shall at least offer means to:

- uniquely identify the user who sent a given data unit from the network that is managed by the Internet Service Provider,
- uniquely identify the user who received a given data unit the network that is managed by the Internet Service Provider, and
- maintain the capability to trace back for a certain period of time.

The common traceability mechanism used by Internet Service Providers assumes that all the users attached to an Internet gateway plugged into the ISP's network, have a trust relation to the ISP . Therefore, it is the ISP's liability when the ISP grants subscribers access over as Internet connection that it leases to them. The traceability mechanisms will keep track only of the WAN addresses and time periods, in which these WAN addresses are assigned to the home gateways or access modems.

In the case of traditional Wireless Internet Service Providers, or hot spots operators, the hot spot traceability mechanism is designed to handle multiple users connected to a public access point. This mechanism has the following characteristics:

- Is based on full control over the access points deployed in the hot spots locations,
- Performs a central allocation of WAN addresses to users' terminals,
- Involves a tunnelling technology for all the control and data traffic to secure the link between the access points and the backend components.

None of these mechanisms is suitable to support traceability in the context of Internet service provisioning by a Virtual Wireless Service Provider. The latter is an entity that provides Internet access over wireless technology without owning and managing the physical broadband access infrastructure.

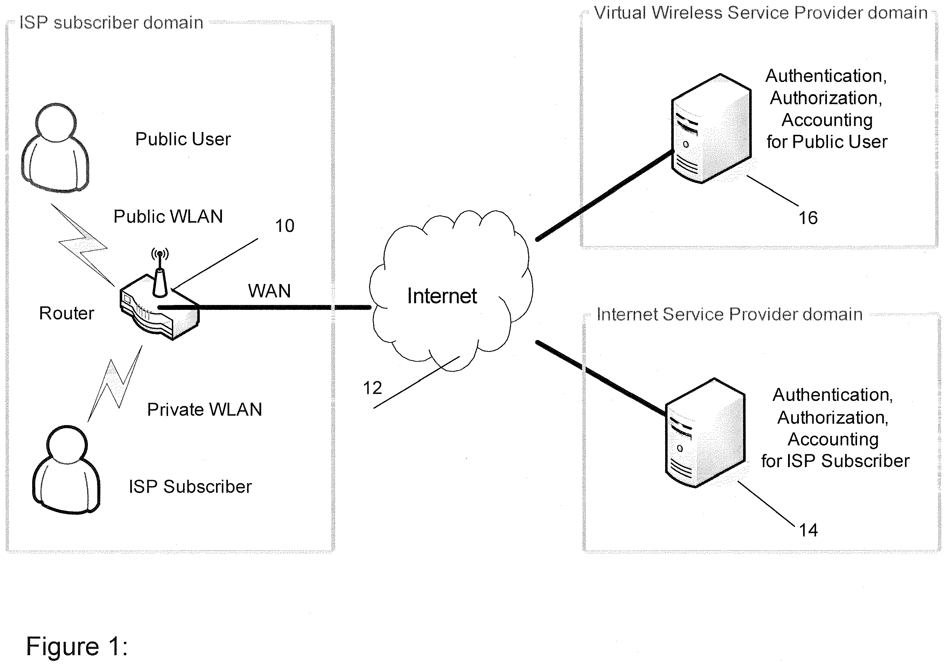

The details of the application context of the proposed traceability scheme is depicted in Figure1 and described below:

- A broadband access router 10 is installed at the premises of an ISP subscriber and belongs to the household that leases for the broadband Internet service.
- The router 10 belonging to a ISP subscriber domain is an Internet gateway, that is, it mediates between the local and wide area interfaces, whereas the latter connects the device to the Internet: In the proposed scenario, the Wide Area Network interface is any of the access technologies, like the wired ones, e.g. ADSL{ITU G992.2}, ADSL+{ITU G992.3}, Cable (ITU J.112) or wireless ones, e.g. WiMAX {IEEE 802.16}.
- The Local Area Network interface includes a wireless interface that allows users to access the router without cables. In the proposed scenario the wireless interface is IEEE802.11 b / g.
- The router offers Internet access service to be shared by two user groups: the members of the household to which the router belongs to, and non-members of the household, who are referred hereafter to as public users.
- The Internet Service Provider, ISP, 14 whose Internet service the household subscribes to, takes care of the authentication, authorization and accounting of the household usage. The ISP belongs to an internet service provider domain.
- The Virtual Wireless Service Provider, VWSP, 16 enables the access to public users over the WLAN interface, which is part of the router 10. VWSP 16 takes care of the authentication, authorization and accounting of the public users. The VWSP belongs to a virtual wireless service provider domain.
- In particular, VWSP role may be played by the same Internet Service Provider who provides access to the household.

In addition to the above context, we assume the following characteristics of the router and of the ISP network that the router is connected to, which are typically met in small office and private house deployments:

- The router is assigned a public IP address on the WAN interface by the ISP.
- The router supports Network Address Translation functionality to handle multiple devices connected to its local interfaces and share one public IP address.
- The router can differentiate the network interface that a device is attached to the router.
- The router assigns private IP addresses to all devices successfully attached to the router so that the private IP addresses assigned to the private users and the ones assigned to the public users belong to different subnetworks.

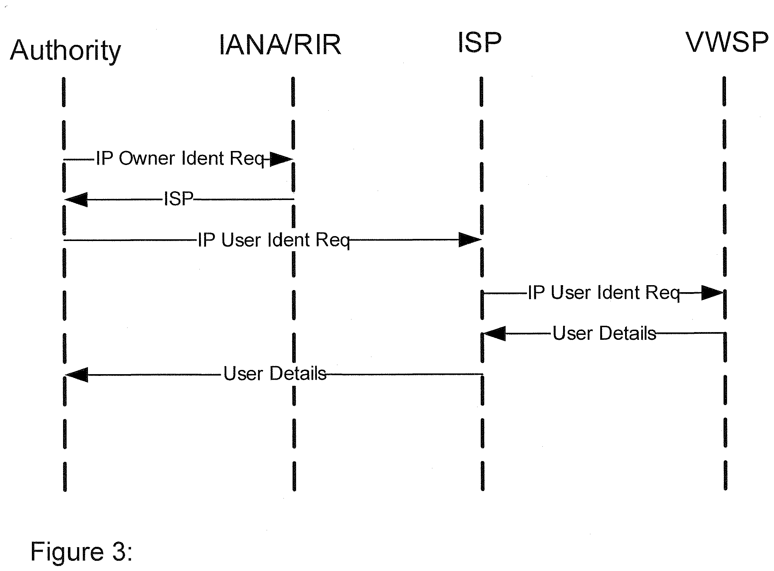

The primary scenario for the use of traceability is a user identification process triggered by a central authority. The scenario is depicted in Figure 3 and works as follows:

AS 1. An institution with the permission to capture user data in the Internet such as the police department captures some user content according to the corresponding laws and regulations. The content is suspected to be illegal and the sender or receiver of the content needs to be identified.

AS 2. The user contents could be a data flow that consists of a number of IP packets with the source and destination IP addresses of each data flow.

AS 3. The institution identifies the Internet Service Providers that are registered with each of the source and destination IP addresses of the user data flow. For that the global IP address allocation database supervised by the Internet Assigned Numbers Authority (IANA) and their local sub-organisations called Regional Internet Registries (RIRs) is used. As a result, one ISP or two ISPs can be identified: if the destination and source address are registered with the same ISP, only one ISP is identified; when the source and destination addresses belong to different ISPs then two ISPs will be related to one packet.

AS 4. The institution requests the identified ISP or two ISPs to provide the identity of the Internet service subscriber who leased the given destination and sources addresses, correspondingly.

AS 5. If the identified entity is a provider of a hotspot that shares broadband Internet access between household users and third parties, henceforth called extended hotspot, the request for the packet owner information may trigger the delivery of the information about sender or receiver of the given IP packet or data flow. The way this request is handled and processed is one particular part of the present invention.

AS 6. The mechanism results in the determination of the identity of the sender or receiver, correspondingly, of a particular IP packet or data flow. The identity is defined by the credentials of the physical person, who previously registered with the Virtual Internet Service Provider.

The core of the traceability mechanism according to the present invention is used in step AS 5 of the above procedure.

Detailed description of the preferred embodiments of the invention

Figure 1 gives the overview of the hot spot system, which is built according to the broadband sharing principle. The presented system comprises of the following entities:

- **Router 10 or Home Gateway.** It is enabled with Wireless LAN and WAN interfaces. Two virtual radio networks (i.e. two Service Set Identifiers) are provided over the WLAN interface with different security profiles for public users and for the household members of the ISP subscriber.
- **AAA server 14.** It is involved in the authentication, authorisation and accounting processes at the backend. In particular, it runs an authentication algorithm to check the validity of the user credentials, and instructs the router on how the user is allowed to access the Internet 12, and the AAA server 14 is responsible of collecting the user session data needed for accounting.
- **Public User.** These are users who are not members of the household that the router belongs to and are connecting or connected to the router over the public wireless network provided by the router.
- **ISP Subscriber,** or **Private User.** These are household members, who are connected to the router over its private wireless network.

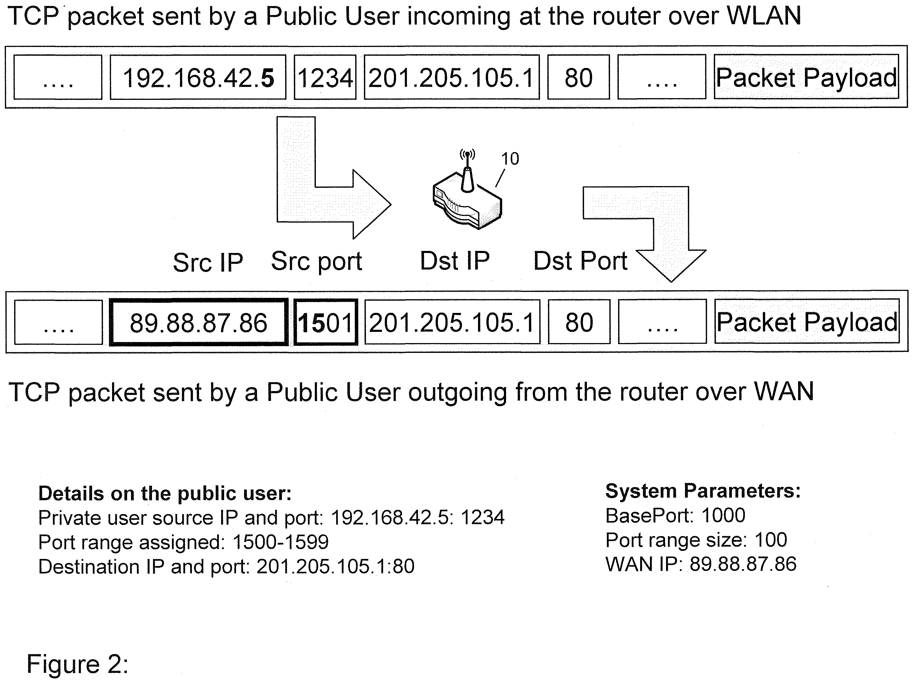

Figure 2 depicts the translation method of the private IP addresses assigned to the terminals of public users and the ports they use, to the public IP address and shared TCP/LTDP ports of the router on the WAN interface. The translation method is explained by example, in which a public user got assigned a private IP address 192.168.42.5 and sends a packet from port 1234 on his client. The packet destination is address 201.205.15.1 and port 80. After this example packet goes through the router 10, its source IP address and source port are changed so that the source port is replaced for the public IP address of the router it has on the WAN interface and the source port is a random free port in the port range defined by the formula {ref}. In figure 2, the source address becomes now 89.88.87.86 and the port 1501. This port could be any free port in the range of (1500, 1599). The destination IP address and port is not changed in this case. For the packet incoming on the WAN interface, the destination IP address, which is the public IP address of the router at WAN interface has to be replaced for the private address of the station of the private user in an inverse function.

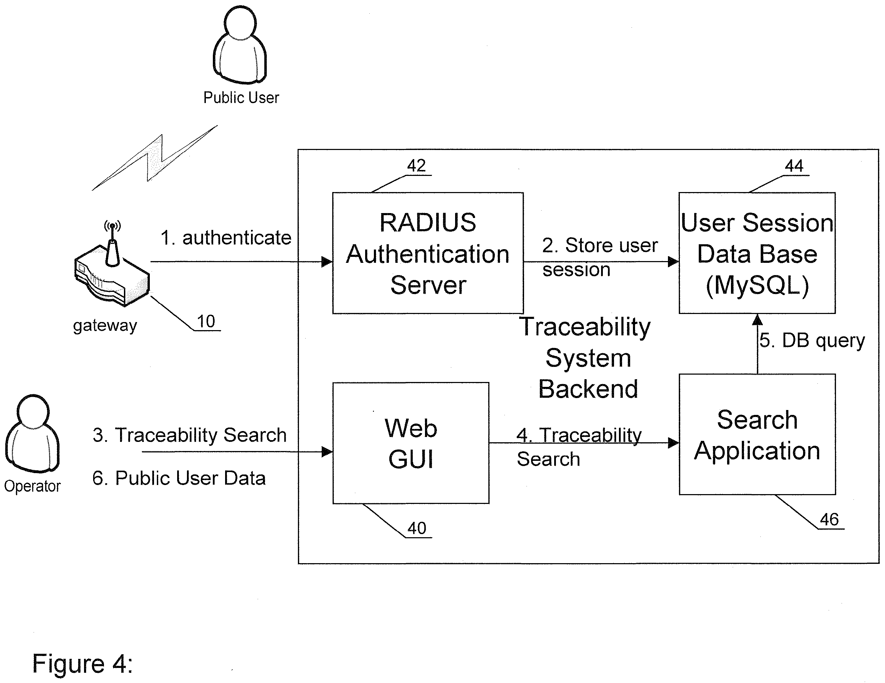

Figure 3 presents the sequential steps of the Internet user identification process. An authority wants to know the user identity, providing the network device address and the creation time of data unit that a user sent or received. The process involves contacting Internet authority (IANA) assigning addresses to the organizations, the Internet Service Provider leasing network addresses to their customers, and Virtual Wireless Service Provider managing addresses behind the CPE of the hot spots. An embodiment of the traceability mechanism is depicted in Figure 4. The main functional blocks of the architecture are:

- **User Interface 40** which is used by the operator. It allows the operator to request the user identification after providing the necessary information related to a captured user data unit.
- **RADIUS Authentication Server 42,** which plays the role of AAA server. It is involved in the registration process for new users, authentication, authorization and accounting.
- **Data Base 44** stores the information about users and user sessions for a configurable period of time, according to the corresponding laws and regulations.

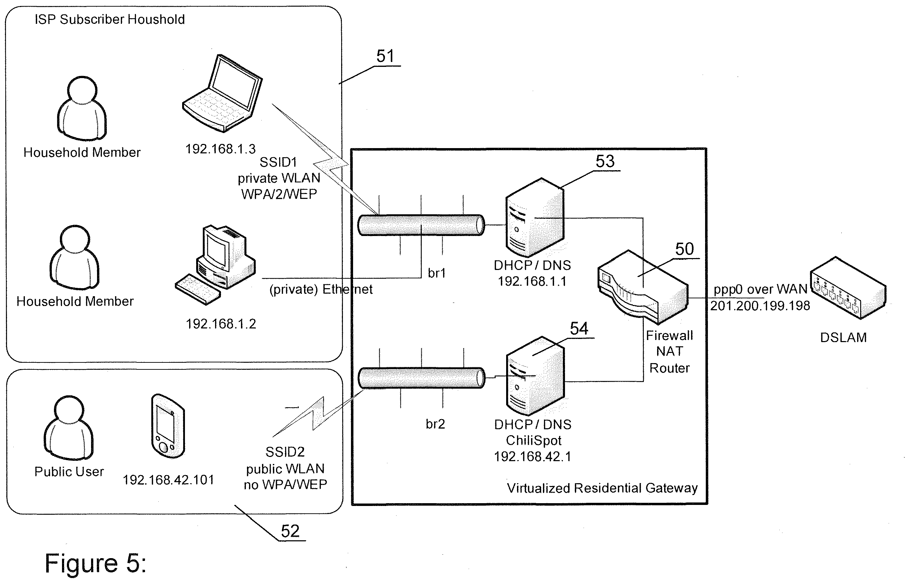

Figure 5 depicts the way public and private user devices are connected to the home gateway and its key functionalities in the particular implementation described in the preferred embodiment of this invention.

The invention consists of the following items:

- **Data model,** which defines the underlying data structures representing the entities related to user traceability, like user, user session, and router.
- **Search function,** which defines (1) the input that the operator feeds into the system when requesting traceability information and (2) the expected search results.
- **Traceability system,** which implements the above data model and the search function. The items are described in the next sections.

**Data Model**

The core of the traceability method is matching the information describing the sender or receiver of a given user data unit, with data of user sessions. Information about users, user sessions, and the routers is relevant for the matching process. The data model depicted in Figure 5 is proposed to capture the relevant information.

The data on a user includes the following:

- user full name,
- user registration data, like physical address,
- user credentials, including a unique user login and other items, like a hashed value of the user password or a user certificate.

The data on each user session includes:

- user session start and termination data and time,
- authentication related information, like the type of authentication mechanism used,
- MAC address of the wireless device used to access the infrastructure
- public IP address assigned by the router when the user device was attached during a particular user session.
- private IP address assigned to the user device in the session.

The sender's private IP address is not stored in the IP packet coming out of the router due to the NAT mechanism. To enable the mapping of the sender or receiver of a given TCP/UDP packet to the user login, which is part of user credentials, as explained in section {CPE Functionality}, the private address is included in the session data. Alternatively, a TCP/UDP port range assigned to the user in this session can be included.

The data on the router includes information on the static characteristics of the router and its deployment. The following pieces of information are included:

- router serial number, which is unique to every router exemplar/instance.
- MAC address of WLAN chip, which uniquely identifies the wireless interface of the router
- physical location of the router installation, which is also referred to hot spot location.
- the router owner

**Search Function**

As explained in section {General remarks}, user traceability requests are triggered by the Virtual Wireless (Internet) Service Provider whenever it is necessary. These requests results in performing a traceability search function through the usage history records stored in the traceability system. Several combinations of search criteria and request results are offered by the system. These options are listed below:

1. Criteria: IP address, TCP/UDP port and time during which the public user accessed the infrastructure. Search result: user name and user data associated with this user name, as well as the hotspot location that was used by the user in this time.
2. Criteria: user name and time period. Search results: all hot spot locations and access times that the user with the given name used in the given time period.
3. Criteria: MAC address and time period. Search results: all hot spot locations and access times that the user with using a device with the given MAC address used in the given time period.

Option 1 is used in the preferred use scenario described in Section {General remarks}. The other options may be helpful to provide more information about the usage history of a given user, possible identified in search according to option 1.

The system described above with reference to KR 20040110667 could be applied together with the present invention to monitor unauthorized access and transmit this information to the system collecting the evidence so that the evidence is used to trace back to the user originating it in the context of broadband sharing based network.

## Traceability System

A computer system used to implement user traceability is depicted in Figure 1. The public user accesses the router 10, or gateway, which is connected to the Internet 12 over a wide area network, like DSL. The traceability system functionalities are deployed both on the router and in the operator's domain in the backend, thus the other elements of the network architecture can be reused as they are. The next sections give details of the functionalities on the router and the backend.

The present invention may be complementary to the method described above with reference to US Patent 7,089,415 if applied to tracing the data unit back to the users authenticated in the line of the above framework.

The details of the router architecture in the broadband sharing platform are shown in Figure 5. Two well-known concepts are fundamental to this architecture: router virtualisation and network address translation. These are described below.

## Router Virtualisation

Router virtualization makes it possible for the router to be divided into two parts that co-exist sharing the network and computational resources of the router and do not interfere with each other. Figure 5 shows the preferred implementation of the router virtualization. In the present implementation, the router virtualisation is based on two standard network mechanisms: Virtual Local Area Network and Service Set Identified, which are briefly explained in the following paragraphs.

In the IEEE 802 group of standards for Local Area Networks, the virtualisation is realized with so called Virtual Local Area Networks, or VLANs {802.1Q-2005}. A VLAN is a standard method to create a logical network within one physical network. Multiple logical networks are isolated from each other and also act as broadcast domains. A derived concept if a VLAN group, which is a mechanism to create one logical network out of one or more VLANs. A VLAN group works for VLANs the same way as a network bridge works for multiple physical network ports.

In the WLAN, a Service Set Identifier, or SSID, is a helpful concept. SSID is a unique identifier of a WLAN network. SSID is attached to the header of every WLAN frame to identify the specific wireless network it belongs to in a medium that may be shared by multiple wireless networks. Many modern wireless access points support multiple SSIDs, which allow the access point to operate two or more logical wireless networks in parallel. The standard behaviour of wireless stations specifies that the station may be attached to only one SSID.

The core of the present virtualisation implementation is done by combining the VLAN group and SSID mechanisms as well as corresponding routing rules and IP address assignment to define the logical networks for public and private networks.

There are two VLAN groups: one for private network 51 and one for public network 52. The private network is mapped to one VLAN group (named br1) bridging the private WLAN and all the Ethernet ports used by the ISP subscriber. The second VLAN group (br2) is used for public wireless network only and consists of the public Service Set Identifier.

The two VLAN groups are assigned a unique local subnet respectively. In the concrete implementation, br1 uses 192.168.1.0/24, while br2 uses 192.168.42.0/25. The first IP address in each subnet is assigned to the bridge interface; the remaining address space is managed by the DHCP server 53 located in the CPE and in charge of assigning IP addresses to clients. Private clients therefore get IP addresses in the range of 192.168.1.2 and 192.168.1.254 while Public users get IP addresses in the range of 192.168.42.2 and 192.168.42.127.

The traffic to and from the Internet is routed via the WAN interface. In this implementation, in particular it is a PPPoE connection over a DSL link that to which the router 50 is connected. In Figure 5, the link is seen as ppp0 interface. The public IP address from the address pool by the ISP is assigned to this interface when the PPPoE connection is established.

Access control on the router 50 is implemented using a captive portal - in this particular implementation, a Chillispot {ref: chilispot} component 54 that runs on top of the Linux operating system is used. It takes over control of the br1 bridge interface let the wireless stations receive and send data when the user using this station gets successfully authenticated. Chillispot also contains its own DHCP and DNS services that serve the public networks, while the other networks on the CPE are served by a separate DHCP and DNS for security reasons.

## Network Address Translation

Network Address Translation {NAT} is a common mechanism used in Internet gateways to handle the problem of IP address shortage. The CPE uses Network Address Translation to map all IP packets sent by the private user and public HotSpot users to a single public IP address. This is the normal behaviour of any DSL router. However, in the EHS context this behaviour makes it hard to trace back TCP connections or UDP packets to individual users.

## Traceability Functionality on the CPE

User traceability is implemented by using dedicated outgoing source port ranges for each user. Two parameters determine the behaviour of port mapping: Baseport and Offset. All outgoing source ports below Baseport are used for connections originating at the private user's network only. Outgoing source ports above Baseport are divided into individual nonoverlapping port ranges for each possible public HotSpot client. For client IP addresses in the public wireless network, which take the form of 192.168.42.n addresses, the minimal and maximal port of the port range assigned to the user is preferably defined as follows:

$$Minport=Baseport+n*Offset,$$

$$Maxport =Baseport+(n+1)*Offset-1.$$

The semantics of the parameters used in the above formula are as follows:

- **Baseport.** The Baseport is the lowest outgoing port number used by public HotSpot users. The private user can use all outgoing port numbers below Baseport.
- **Offset.** The Offset multiplied with the last octet of a public HotSpot user's IP number is added to the Baseport to calculate the minimum outgoing port number a particular public HotSpot user can use. Each public HotSpot user therefore has a range of "offset" Ports.
- **n.** the last part of the private IP address of the public user.

By looking at the source port of outgoing connections from the CPE private user connections and the client IP of public HotSpot users can be easily calculated. The client IP of a public HotSpot user can then be associated with an account by using information from the backend database.

## CPE Configuration

To enable more dynamic allocation of ports, e.g. to handle more users attached to one hot spot, the basic parameters used in the above formula can be configured remotely by the operator using a remote management protocol, like TR-069 {Ed. Bernstein J, Spets T.: Technical Report "CPE WAN ManagementProtocol", DSL Forum, May 2004} or SNMP {Rose M., McCloghrie K.: "Structure and Identification of Management Information for TCP/IP-based Internets", RFC 1155 May 1990}. In the presented embodiment, the TR-069 protocol is used for setting these parameters and in order to do this new proprietary commands have been added. The parameters baseport and offset have default values of 10000 and 100, correspondingly, but can be changed with a TR-069 set command.

## CPE Implementation

The router runs an embedded version of the Linux operating system and many of its standard features (e.g. booting scripts) and tools are used for the CPE part of the embodiment of the system and method for traceability.

IPtables{https://www.netfilter.org}, which is a standard network packet filtering mechanisms in Linux 2.4 or 2.6 kernels that allows intercepting and processing network packets at different phases of the processing cycle in the Linux kernel, is used for setting up firewalling and safe routing between the public and private networks provisioned by the virtualized gateway or CPE. The particular implementation of user traceability makes use of masquerading feature of iptables, which translates the packet source IP addresses into the WAN public IP address of the gateway and maps the TCP/UDP ports according to the formula described in section { Traceability Functionality on the CPE}. The needed iptables commands are issued in rc.traceability in /etc/init.d, which is the directory where the booting scripts are kept in the used Monta Vista embedded Linux distribution. These files are located in the CPE filesystem and are stored in the non-volatile Flash memory of the gateway, as part of the router firmware image. The rc.traceability file is called from rc.chillispot that in turn calls from rcS file, which is the main initiation script used to implement traceability in the CPE. rc.tracebility creates a new NAT table called TRACE and adds two masquerading rules for every possible client IP in the public HotSpot network. The first rule handles TCP traffic, while the second rule handles UDP traffic. These rules are coded as follows:

```
iptables -t nat -A TRACE -p tcp -s 192.168.42.$i \ -j
MASQUERADE --to-ports $PORT1-$PORT2
iptables -t nat -A TRACE -p udp -s 192.168.42.$i \ -j
MASQUERADE --to-ports $PORT1-$PORT2
```

Where variable i contains the last part of the client IP address and $PORT1-$PORT2 defines the port range assigned to this client IP as calculated in the above formula. For the private network, two additional iptables rules are defined to change the source addresses of TCP and UDP packets coming from the private networks to the port range below the Baseport:

```
iptables -t nat -A TRACE -p tcp -j MASQUERADE --
to-ports 1-$MAXPRIV
iptables -t nat -A TRACE -p udp -j MASQUERADE
--to-ports 1-$MAXPRIV
```

whereby MAXPRIV is a variable that contains the highest port number below Baseport. Finally, such defined TRACE table is activated by another iptables rule executed in script rc.traceability so that all packets after being routed by the kernel are redirected to it and the masquerading rules defined above are applied:

```
iptables -t nat -I POSTROUTING -j TRACE
```

The presented implementation is based on static masquerading rules, which do not need to be changed during runtime. This makes the implementation easy to maintain and straightforward to port to any other Linux based gateway.

**Backend Functionality**

The functionality deployed in the backend is concerned with:

- collecting and storing data on the access sessions. The data required is user identity, IP address of user's attachment, used ports, and session start and end times.
- providing an operator interface to search the collected session data for the user identity, like login, name and address related to the communication port of and the timestamp of the user data unit.
- configuring the parameters of the data storage, like the number of days for which the data is to be kept in the data base.

**Backend Implementation**

The software architecture used for implementing the above functionality is depicted in Figure 4 and consists of the following components:

- user session data base 44, which is a relational data base storing the data model defined above. The data base is accessed by the RADIUS during the authentication process and by the application layer during the identification process search. In the particular implementation, a MySQL data base is used.
- FreeRADIUS authentication server 42, which is an open source implementation of the RADIUS protocol and is accessed by the routers 10 during the user authentication.
- Search application 46, where traceability search and configuration is implemented. The component interacts with the user interface 40 and the data base 44.
- GUI interface 40, which is a web based interface for the operator and allows accessing the functionalities offered by the application layer.

GUI supports web interface to the following functions of the application layer:

- Access control to other functionalities of the traceability system.
- Access to different traceability search.
- changing the number of days the user trace ability needs to be kept. By default, the number of days in the system would be for example 30 days, and administrator can change it with in the limit of preferably 10 to 100 days. For example any records which are not legally required to be kept anymore can be deleted after a certain period. The period depends on data privacy regulation.

An example scenario in Figure 4 explains the interaction of the backend components of the Traceability System. In the considered scenario, the public user authenticates with the router 10 (action 1). The router 10 contacts the RADIUS authentication server 42 using the RADIUS protocol over the Internet. The server checks the user credentials with the data base 44 and notifies the router to grant access to the user if the authentication is successful. The data base 44 maintains the user credentials and the records of user sessions. Whenever a user tries to authenticate or terminates his user session, the records are updated (action 2. store user session).

Now the network operator wants to perform a traceability search to identify the user and provides the needed information described above. He accesses the traceability system through a web-based graphical user interface (GUI) 40 and initiates the search in step 3. The search is transferred to the search application 46 (Step 4), which parses the operator's input to translate it into proper data base queries and performs the queries on the user session data base 44 (Step 5). The query contains the data provided by the operator and matches them against the records of all user sessions. The user(s) who initiated the found user sessions matching the operator constraints are then returned to the application that presents the results in a human readable format over the web GUI 40 in Step 6.

In addition to the above functions triggered by the operator, the application layer implements the user session history clearance that is performed in the background. The system deletes user session records that are older than the time window configured by the operator. The process is run regularly in the background. In the implementation with FreeRADIUS, the records are deleted from the corresponding data base tables and the process runs once a day. The radacct table is the entity in the FreeRadius database that stores all the data related to a user session, and that is used for accounting and also traceability.

As described above the invention relates to a user identification method accessing a new type of public wireless access network built on top of broadband sharing principle, wherein a residential gateway deployed at the ISP customer is turned into fully-fledged public hot spot through a router virtualisation technology. Shared use mode of a home gateway, the need for backward compatibility to the common functionality of its household-dedicated use and a novel business model of a Virtual Internet Service Provider impose additional security requirements on such access infrastructure. In this invention, the method allows for identification of the receiver and / or the sender of a given user data unit that has accessed a network based on the broadband sharing principle. Furthermore, the architecture of a computer system implementing such identification method facilitates storing and managing the usage history records, as well searching the records for the sake of user traceability.

**Claims**

1. Method for identifying a user, in particular the receiver and / or the sender of a user data unit that has been accessing an access network based on a broadband sharing principle, wherein a customer premise equipment comprises a router (10, 50), which uses the broadband sharing principle by offering Internet access service to be shared by two user groups, the members of the household to which the router (10, 50) belongs to and public users and wherein an Internet Service Provider (14) takes care of the authentication of the household usage and wherein a Virtual Wireless Service Provider (16) takes care of the authentication of the public users, comprising the following steps:

   a. authenticating the user at a start of a user session,
   b. assigning a unique communication identifier to a user device of the user being connected to the access network, wherein the router (10, 50) provides a Network Address Translation, wherein a private IP address is assigned to a user device of a public user and the ports this user device uses is translated to a public IP address and shared TCP/UDP ports of the router (10, 50) on a wide area network interface, and
   c. storing in a database of the Virtual Wireless Service Provider (16) the unique communication identifier, the user and user session related information,

   wherein the router (10, 50) provides a mapping method from the private IP address assigned to a user device of the public user and TCP/UDP ports used by this user device, to a public IP address assigned to the router (10, 50) and the ports allocated to public user, whereas the private IP address is assigned by the router (10, 50) and the public IP address is assigned by the Internet Service Provider (14), wherein the set of ports used by the public user maps to a port range allocated to this public user.

2. Method according to claim 1, further comprising the step:

   d. performing a search on the database of the Virtual Wireless Service Provider (16) triggered by a user traceability search, using the source or destination address of the given user data unit, which relates to the unique communication identifier of the router (10, 50), at which the data sender or the receiver, correspondingly, was attached during the data transmission, in order to identify the user, in particular the sender or the receiver of the data, respectively.

3. Method according to claim 1 or 2, further comprising the steps:

   e. automatically managing the database of the Virtual Wireless Service Provider (16) by removing usage history records, preferably usage history records which are not legally required to be kept.

4. Method according to any of claims 1 to 3, wherein the user contacts a customer premise equipment for being authenticated, the customer premise equipment contacts an authentication server (42) over the access network, the authentication server (42) checks user credentials with data stored in the database of the Virtual Wireless Service Provider (16) and notifies the customer premise equipment to grant access to the user if the authentication is successful.

5. Method according to any of claims 1 to 4, wherein according to the IP-broadband sharing principle a public IP address and a port range is assigned to the user device temporarily for a user session.

6. Method according to any of claims 1 to 5, wherein the authentication server (42) of the Virtual Wireless Service Provider (16) stores in the database of the Virtual Wireless Service Provider (16) the unique communication identifier, user name, user credentials, the session start time and the session end time whenever the user tries to authenticate or terminates a user session.

7. Method according to any of claims 1 to 6, wherein the authentication server (42) further stores in the operator's database at least one of the following user and session related information data:

   i. data on a user, preferably

      a. user credentials, for example a unique user login, a hashed value of the user password or a user certificate, and
      b. a user full name, and optionally
      c. user registration data for example a physical address,

ii. data on each user session, in particular

a. said user session start and termination data and time, and preferably

b. authentication related information for example the type of authentication mechanism used,

c. MAC address of a wireless device used to access the access networks,

d. public IP address assigned to the customer premise equipment when the user device was attached during a particular session,

e. TCP/UDP port and time during which the user accessed the network and

f. private IP address assigned to the user device during said particular session, and

iii. data on the customer premise equipment, preferably

a. information on static characteristics of a router (10, 50) and its deployment, for example a router serial number,

b. MAC address of a wireless interface of the router (10, 50),

c. physical location of the router installation and ,

d. information about the owner of the router (10, 50).

8. Method according to any of claims 2 to 7, wherein a user traceability search is triggered by the operator of the Virtual Wireless Service Provider (16) using at least one of the following options:

i. search criteria are IP address, TCP/UDP port and time point, in which a user data packet was sent, providing as search results user name and user data associated with this user name and optionally location of the customer premise equipment that was used by the user in the given time period,

ii. other search criteria are user name and time period, providing as search results all locations of the customer premise equipments and access times that the user with the given name used in the given time period, and

iii. still other search criteria are MAC address and time period, providing as search results all locations of the customer premise equipments and access times that the user used with a device with the given MAC address in the given time period.

9. Method according to any of claims 1 to 8, wherein said Internet Service Provider (14) further takes care of at least one of the authorization and accounting of the household usage and wherein said Virtual Wireless Service Provider (16) further takes care of at least one of the authorization and accounting of the public users.

10. Method according to any of claims 2 to 9, wherein an authority initiates a user traceability search by providing search criteria comprising at least one of the following steps:

i. contacting an Internet authority, which assigns addresses to organizations,

ii. contacting an Internet Service Provider (14) leasing network addresses-to their customers, and

iii. contacting a Virtual Wireless Service Provider (16) managing addresses behind a customer premise equipment.

11. Method according to any of claims 3 to 10, wherein the step of removing usage history records is performed regularly, preferably once a day, wherein user session records are deleted which are older than a given time limit, which can be configured by an operator.

12. System for identifying a user, in particular the receiver and / or the sender of a user data unit that has been accessing an access network based on a broadband sharing principle, wherein a customer premise equipment comprises a router (10, 50), which uses the broadband sharing principle by offering Internet access service to be shared by two user groups, the members of the household to which the router (10, 50) belongs to and public users and wherein an Internet Service Provider (14) takes care of the authentication of the household usage and wherein a Virtual Wireless Service Provider (16) takes care of the authentication of the public users, comprising:

a. means for authenticating the user at a start of a user session,

b. means for assigning a unique communication identifier to a user device of the user being connected to the access network,

wherein a router (10, 50) is adapted to provide a Network Address Translation, wherein a private IP address is assigned to a user device of a public user and the ports this user device uses is translated to a public IP address and shared TCP/UDP ports of the router (10, 50) on a wide area network interface; and

c. a database of a Virtual Wireless Service Provider (16) for storing the unique communication identifier, the user and user session related information,

wherein the router (10, 50) is adapted to provide a mapping method from the private IP address assigned to a user device of the public user and TCP/UDP ports used by this user device, to a public IP address assigned to the router (10, 50) and the ports allocated to public user, whereas the private IP address is assigned by the router (10, 50) and the public IP address is assigned by the Internet Service Provider (14), wherein the set of ports used by the public user maps to a port range allocated to this public user.

13. System according to claim 12, further comprising:

    d. means for performing a search on the database of the Virtual Wireless Service Provider (16) triggered by a user traceability search, using the source or destination address of the given user data unit, which relates to the unique communication identifier of the router (10, 50), at which the data sender or the receiver, correspondingly, was attached during the data transmission, in order to identify the user, in particular the sender or the receiver of the data, respectively.

14. System according to claim 12 or 13, further comprising:

    e. means for automatically managing the database of the Virtual Wireless Service Provider (16) by removing usage history records, preferably usage history records which are not legally required to be kept.

15. System according to any of claims 12 to 14, comprising a customer premise equipment which the user contacts for being authenticated, and wherein the customer premise equipment contacts an authentication server (42) over the access network, the authentication server (42) checks user credentials with data stored in the database of the Virtual Wireless Service Provider (16) and notifies the customer premise equipment to grant access to the user if the authentication is successful.

16. System according to any of claims 12 to 15, wherein according to the IP-broadband sharing principle a public IP address and a port range is assigned to the user device temporarily for a user session.

17. System according to any of claims 12 to 16, wherein the authentication server (42) of the Virtual Wireless Service Provider (16) stores in the database of the Virtual Wireless Service Provider (16) the unique communication identifier, user name, user credentials, the session start time and the session end time whenever the user tries to authenticate or terminates a user session.

18. System according to any of claims 12 to 17, wherein the authentication server (42) of the Virtual Wireless Service Provider (16) further stores in the database of the Virtual Wireless Service Provider (16) at least one of the following user and session related information data:

    i. data on a user, preferably

        a. user credentials, for example a unique user login, a hashed value of the user password or a user certificate, and
        b. a user full name, and optionally
        c. user registration data for example a physical address,

    ii. data on each user session, in particular

        a. said user session start and termination data and time, and preferably
        b. authentication related information for example the type of authentication mechanism used,
        c. MAC address of a wireless device used to access the access network,
        d. public IP address assigned to the customer premise equipment when the user device was attached during a particular session,
        e. TCP/UDP port and time during which the user accessed the network and
        f. private IP address assigned to the user device during said particular session, and

    iii. data on the customer premise equipment, preferably

        a. information on static characteristics of a router (10, 50) and its deployment, for example a router serial number,
        b. MAC address of a wireless interface of the router (10, 50),
        c. physical location of the router installation and
        d. information about the owner of the router (10, 50).

19. System according to any of claims 15 to 18, wherein said Internet Service Provider (14) further takes care of at least one of the authorization and accounting of the household usage and wherein said Virtual Wireless Service Provider (16) further takes care of at least one of the authorization and accounting of the public users.

20. System according to any of claims 12 to 19, comprising access routers (10, 50) shared by the members of a broadband Internet service and public users, access network and necessary software and hardware components in the backend in particular to support a method according to any of claims 1 to 12, wherein the system

    i. persistently stores the usage history records for future reference,
    ii. manages the life time of the usage history records as configured by an operator, and
    iii. accepts user traceability searches through a web-based user interface (40) and processes them interactively.

**Patentansprüche**

1. Verfahren zum Identifizieren eines Benutzers, insbesondere des Empfängers und/oder des Absenders einer Benutzerdateneinheit, welche auf der Grundlage eines Breitband-Teilungsprinzips auf ein Teilnehmernetz zugegriffen hat, wobei ein kundeneigenes Gerät einen Router (10, 50) umfasst, der das Breitband-Teilungsprinzip durch Anbieten eines Internetzugangsdienstes, der von zwei Benutzergruppen zu teilen ist, nämlich den Mitgliedern des Haushalts, zu dem der Router (10, 50) gehört, und öffentlichen Benutzern, verwendet, und wobei ein Internetdienstanbieter (14) für die Authentifizierung der Haushaltverwendung sorgt und wobei ein virtueller Drahtlosdienstanbieter (16) für die Authentifizierung der öffentlichen Benutzer sorgt, welches folgende Schritte aufweist:

    a. Authentifizieren des Benutzers zu Beginn einer Benutzersitzung,
    b. Zuweisen einer eindeutigen Kommunikationskennung zu einer Benutzervorrichtung des Benutzers, die mit dem Teilnehmernetz verbunden ist, wobei der Router (10, 50) eine Netzadressenumsetzung bereitstellt, wobei eine private IP-Adresse einer Benutzervorrichtung eines öffentlichen Benutzers zugewiesen wird und die Ports, die diese Benutzervorrichtung verwendet, in eine öffentliche IP-Adresse und geteilte TCP/UDP-Ports des Routers (10, 50) auf einer Weitbereichsnetzschnittstelle umgesetzt werden, und
    c. Speichern der eindeutigen Kommunikationskennung, der benutzerbezogenen Informationen und der auf die Benutzersitzung bezogenen Informationen in einer Datenbank des virtuellen Drahtlosdienstanbieters (16),

wobei der Router (10, 50) ein Abbildungsverfahren von der privaten IP-Adresse, die einer Benutzervorrichtung des öffentlichen Benutzers und von dieser Benutzervorrichtung verwendeten TCP/UDP-Ports zugewiesen ist, auf eine öffentliche IP-Adresse, die dem Router (10, 50) und einem öffentlichen Benutzer zugeordneten Ports zugewiesen ist, bereitstellt, wobei die private IP-Adresse durch den Router (10, 50) zugewiesen wird und die öffentliche IP-Adresse durch den Internetdienstanbieter (14) zugewiesen wird, wobei die Portsätze, die vom öffentlichen Benutzer verwendet werden, auf einen diesem öffentlichen Benutzer zugeordneten Portbereich abgebildet werden.

2. Verfahren nach Anspruch 1, welches ferner folgenden Schritt aufweist:

    d. Ausführen einer Suche an der Datenbank des virtuellen Drahtlosdienstanbieters (16), die durch eine Benutzerverfolgbarkeitssuche ausgelöst wird, unter Verwendung der Quell- oder Zieladresse der gegebenen Benutzerdateneinheit, die sich auf die eindeutige Kommunikationskennung des Routers (10, 50) bezieht, woran der Datenabsender bzw. der Empfänger während der Datenübertragung angeschlossen war, um den Benutzer, insbesondere den Absender oder den Empfänger der Daten, zu identifizieren.

3. Verfahren nach Anspruch 1 oder 2, welches ferner folgende Schritte aufweist:

    e. automatisches Verwalten der Datenbank des virtuellen Drahtlosdienstanbieters (16) durch Entfernen von Benutzergeschichtsdatensätzen, vorzugsweise Benutzergeschichtsdatensätzen, die nicht von Gesetzes wegen aufrechterhalten werden müssen.

4. Verfahren nach einem der Ansprüche 1 bis 3, wobei der Benutzer ein kundeneigenes Gerät zur Authentifizierung kontaktiert, das kundeneigene Gerät einen Authentifizierungsserver (42) über das Teilnehmernetz kontaktiert und der Authentifizierungsserver (42) Benutzerberechtigungsnachweise mit in der Datenbank des virtuellen Drahtlosdienstanbieters (16) gespeicherten Daten prüft und dem kundeneigenen Gerät mitteilt, dass es dem Benutzer Zugang gewähren soll, falls die Authentifizierung erfolgreich ist.

5. Verfahren nach einem der Ansprüche 1 bis 4, wobei nach dem IP-Breitband-Teilungsprinzip eine öffentliche IP-Adresse und ein Portbereich der Benutzervorrichtung vorübergehend für eine Benutzersitzung zugewiesen werden.

6. Verfahren nach einem der Ansprüche 1 bis 5, wobei der Authentifizierungsserver (42) des virtuellen Drahtlosdienstanbieters (16) in der Datenbank des virtuellen Drahtlosdienstanbieters (16) die eindeutige Kommunikationskennung, den Benutzernamen, Benutzerberechtigungsnachweise, die Sitzungsanfangszeit und die Sitzungsendzeit immer dann speichert, wenn der Benutzer versucht, sich zu authentifizieren, oder eine Benutzersitzung beendet.

7. Verfahren nach einem der Ansprüche 1 bis 6, wobei der Authentifizierungsserver (42) ferner in der Betreiberdatenbank zumindest eine der folgenden benutzer- und sitzungsbezogenen Informationsdateneinheiten speichert:

> i. Daten über einen Benutzer, vorzugsweise

> > a. Benutzerberechtigungsnachweise, beispielsweise eine eindeutige Benutzeranmeldung, einen Hash-Wert des Benutzerpassworts oder ein Benutzerzertifikat und
> > b. den vollständigen Namen des Benutzers und optional
> > c. Benutzerregistrierungsdaten, beispielsweise eine physikalische Adresse,

> ii. Daten über jede Benutzersitzung, insbesondere

> > a. die Benutzersitzungsanfangs- und -beendigungsdaten und -zeit und vorzugsweise
> > b. authentifizierungsbezogene Informationen, beispielsweise den Typ des verwendeten Authentifizierungsmechanismus,
> > c. die MAC-Adresse einer für den Zugriff auf das Teilnehmernetz verwendeten Drahtlosvorrichtung,
> > d. die öffentliche IP-Adresse, die dem kundeneigenen Gerät zugewiesen wurde, als die Vorrichtung während einer bestimmten Sitzung angeschlossen wurde,
> > e. den TCP/UDP-Port und die Zeit, während derer der Benutzer auf das Netz zugegriffen hat, und
> > f. die private IP-Adresse, die der Benutzervorrichtung während der bestimmten Sitzung zugewiesen wurde, und

> iii. Daten über das kundeneigene Gerät, vorzugsweise

> > a. Informationen über statische Eigenschaften eines Routers (10, 50) und seine Einrichtung, beispielsweise die Seriennummer des Routers,
> > b. die MAC-Adresse einer Drahtlosschnittstelle des Routers (10, 50),
> > c. den physikalischen Ort der Routerinstallation und
> > d. Informationen über den Eigentümer des Routers (10, 50).

8. Verfahren nach einem der Ansprüche 2 bis 7, wobei eine Benutzerverfolgbarkeitssuche vom Betreiber des virtuellen Drahtlosdienstanbieters (16) unter Verwendung zumindest einer der folgenden Optionen ausgelöst wird:

> i. Suchkriterien sind IP-Adresse, TCP/UDP-Port und Zeitpunkt, zu dem ein Benutzerdatenpaket gesendet wurde, Bereitstellen des Benutzernamens und von Benutzerdaten in Zusammenhang mit diesem Benutzernamen und optional des Orts des kundeneigenen Geräts, das vom Benutzer im gegebenen Zeitraum verwendet wurde, als Suchergebnisse,
> ii. andere Suchkriterien sind Benutzername und Zeitraum, Bereitstellen aller Orte der kundeneigenen Geräte und Zugriffszeiten, welche der Benutzer mit dem gegebenen Namen im gegebenen Zeitraum verwendet hat, als Suchergebnisse und
> iii. weitere Suchkriterien sind MAC-Adresse und Zeitraum, Bereitstellen aller Orte der kundeneigenen Geräte und Zugriffszeiten, die der Benutzer mit einer Vorrichtung mit einer gegebenen MAC-Adresse im gegebenen Zeitraum verwendet hat, als Suchergebnisse.

9. Verfahren nach einem der Ansprüche 1 bis 8, wobei der Internetdienstanbieter (14) ferner für die Autorisierung und/oder den Nachweis der Haushaltsverwendung sorgt und wobei der virtuelle Drahtlosdienstanbieter (16) ferner für die Autorisierung und/oder den Nachweis der öffentlichen Benutzer sorgt.

10. Verfahren nach einem der Ansprüche 2 bis 9, wobei eine Behörde eine Benutzerverfolgbarkeitssuche durch Bereitstellen von Suchkriterien einleitet, die wenigstens einen der folgenden Schritte aufweisen:

> i. Kontaktieren einer Internetbehörde, die Organisationen Adressen zuweist,
> ii. Kontaktieren eines Internetdienstanbieters (14), der an seine Kunden Netzadressen vermittelt, und
> iii. Kontaktieren eines virtuellen Drahtlosdienstanbieters (16), der Adressen hinter einem kundeneigenen Gerät verwaltet.

11. Verfahren nach einem der Ansprüche 3 bis 10, wobei der Schritt des Entfernens von Verwendungsgeschichtsdatensätzen regelmäßig, vorzugsweise einmal am Tag, ausgeführt wird, wobei Benutzersitzungsdatensätze gelöscht werden, die älter als eine gegebene Zeitgrenze sind, die von einem Betreiber konfiguriert werden kann.

12. System zum Identifizieren eines Benutzers, insbesondere des Empfängers und/oder des Absenders einer Benutzerdateneinheit, welche auf der Grundlage eines Breitband-Teilungsprinzips auf ein Teilnehmernetz zugegriffen hat, wobei ein kundeneigenes Gerät einen Router (10, 50) umfasst, der das Breitband-Teilungsprinzip durch Anbieten eines Internetzugangsdienstes, der von zwei Benutzergruppen zu teilen ist, nämlich den Mitgliedern des Haushalts, zu dem der Router (10, 50) gehört, und öffentlichen Benutzern, verwendet, und wobei ein Internetdienstanbieter (14) für die Authentifizierung der Haushaltverwendung sorgt und wobei ein virtueller Drahtlosdienstanbieter (16) für die Authentifizierung der öffentlichen Benutzer sorgt, welches Folgendes aufweist:

a. Mittel zum Authentifizieren des Benutzers zu Beginn einer Benutzersitzung,
b. Mittel zum Zuweisen einer eindeutigen Kommunikationskennung zu einer Benutzervorrichtung des Benutzers, die mit dem Teilnehmernetz verbunden ist, wobei ein Router (10, 50) dafür eingerichtet ist, eine Netzadressenumsetzung bereitzustellen, wobei eine private IP-Adresse einer Benutzervorrichtung eines öffentlichen Benutzers zugewiesen wird und die Ports, die diese Benutzervorrichtung verwendet, in eine öffentliche IP-Adresse und geteilte TCP/UDP-Ports des Routers (10, 50) auf einer Weitbereichsnetzschnittstelle umgesetzt werden, und
c. eine Datenbank eines virtuellen Drahtlosdienstanbieters (16) zum Speichern der eindeutigen Kommunikationskennung, der benutzerbezogenen Informationen und der auf die Benutzersitzung bezogenen Informationen,

wobei der Router (10, 50) dafür eingerichtet ist, ein Abbildungsverfahren von der privaten IP-Adresse, die einer Benutzervorrichtung des öffentlichen Benutzers und von dieser Benutzervorrichtung verwendeten TCP/UDP-Ports zugewiesen ist, auf eine öffentliche IP-Adresse, die dem Router (10, 50) und den dem öffentlichen Benutzer zugeordneten Ports zugewiesen ist, bereitzustellen, wobei die private IP-Adresse durch den Router (10, 50) zugewiesen wird und die öffentliche IP-Adresse durch den Internetdienstanbieter (14) zugewiesen wird, wobei die Portsätze, die vom öffentlichen Benutzer verwendet werden, auf einen diesem öffentlichen Benutzer zugeordneten Portbereich abgebildet werden.

13. System nach Anspruch 12, welches ferner Folgendes aufweist:

d. Mittel zum Ausführen einer Suche an der Datenbank des virtuellen Drahtlosdienstanbieters (16), die durch eine Benutzerverfolgbarkeitssuche ausgelöst wird, unter Verwendung der Quell- oder Zieladresse der gegebenen Benutzerdateneinheit, die sich auf die eindeutige Kommunikationskennung des Routers (10, 50) bezieht, woran der Datenabsender bzw. der Empfänger während der Datenübertragung angeschlossen war, um den Benutzer, insbesondere den Absender oder den Empfänger der Daten, zu identifizieren.

14. System nach Anspruch 12 oder 13, welches ferner Folgendes aufweist:

e. Mittel zum automatischen Verwalten der Datenbank des virtuellen Drahtlosdienstanbieters (16) durch Entfernen von Benutzergeschichtsdatensätzen, vorzugsweise Benutzergeschichtsdatensätzen, die nicht von Gesetzes wegen aufrechterhalten werden müssen.

15. System nach einem der Ansprüche 12 bis 14, welches ein kundeneigenes Gerät aufweist, das der Benutzer zur Authentifizierung kontaktiert, und wobei das kundeneigene Gerät einen Authentifizierungsserver (42) über das Teilnehmernetz kontaktiert und der Authentifizierungsserver (42) Benutzerberechtigungsnachweise mit in der Datenbank des virtuellen Drahtlosdienstanbieters (16) gespeicherten Daten prüft und dem kundeneigenen Gerät mitteilt, dass es dem Benutzer Zugang gewähren soll, falls die Authentifizierung erfolgreich ist.

16. System nach einem der Ansprüche 12 bis 15, wobei nach dem IP-Breitband-Teilungsprinzip eine öffentliche IP-Adresse und ein Portbereich der Benutzervorrichtung vorübergehend für eine Benutzersitzung zugewiesen werden.

17. System nach einem der Ansprüche 12 bis 16, wobei der Authentifizierungsserver (42) des virtuellen Drahtlosdienstanbieters (16) in der Datenbank des virtuellen Drahtlosdienstanbieters (16) die eindeutige Kommunikationskennung, den Benutzernamen, Benutzerberechtigungsnachweise, die Sitzungsanfangszeit und die Sitzungsendzeit immer dann speichert, wenn der Benutzer versucht, sich zu authentifizieren, oder eine Benutzersitzung beendet.

18. System nach einem der Ansprüche 12 bis 17, wobei der Authentifizierungsserver (42) des virtuellen Drahtlosdienstanbieters (16) ferner in der Datenbank des virtuellen Drahtlosdienstanbieters (16) zumindest eine der folgenden benutzer- und sitzungsbezogenen Informationsdateneinheiten speichert:

i. Daten über einen Benutzer, vorzugsweise

    a. Benutzerberechtigungsnachweise, beispielsweise eine eindeutige Benutzeranmeldung, einen Hash-Wert des Benutzerpassworts oder ein Benutzerzertifikat und
    b. den vollständigen Namen des Benutzers und optional
    c. Benutzerregistrierungsdaten, beispielsweise eine physikalische Adresse,

ii. Daten über jede Benutzersitzung, insbesondere

    a. die Benutzersitzungsanfangs- und -beendigungsdaten und -zeit und vorzugsweise
    b. authentifizierungsbezogene Informationen, beispielsweise den Typ des verwendeten Authentifizierungsmechanismus,
    c. die MAC-Adresse einer für den Zugriff auf das Teilnehmernetz verwendeten Drahtlosvorrichtung,
    d. die öffentliche IP-Adresse, die dem kundeneigenen Gerät zugewiesen wurde, als die Vorrichtung während einer bestimmten Sitzung angeschlossen wurde,
    e. den TCP/UDP-Port und die Zeit, während derer der Benutzer auf das Netz zugegriffen hat, und
    f. die private IP-Adresse, die der Benutzervorrichtung während der bestimmten Sitzung zugewiesen wurde, und

iii. Daten über das kundeneigene Gerät, vorzugsweise

    a. Informationen über statische Eigenschaften eines Routers (10, 50) und seine Einrichtung, beispielsweise die Seriennummer des Routers,
    b. die MAC-Adresse einer Drahtlosschnittstelle des Routers (10, 50),
    c. den physikalischen Ort der Routerinstallation und
    d. Informationen über den Eigentümer des Routers (10, 50).

19. System nach einem der Ansprüche 15 bis 18, wobei der Internetdienstanbieter (14) ferner für die Autorisierung und/oder den Nachweis der Haushaltsverwendung sorgt und wobei der virtuelle Drahtlosdienstanbieter (16) ferner für die Autorisierung und/oder den Nachweis der öffentlichen Benutzer sorgt.

20. System nach einem der Ansprüche 12 bis 19, welches Zugangsrouter (10, 50), die von den Teilnehmern eines Breitband-Internetdienstes und öffentlichen Benutzern geteilt verwendet werden, ein Teilnehmernetz und erforderliche Software- und Hardwarekomponenten im Backend, insbesondere zur Unterstützung eines Verfahrens nach einem der Ansprüche 1 bis 12 aufweist, wobei das System:

    i. die Verwendungsgeschichtsdatensätze für künftige Bezugnahmen permanent speichert,
    ii. die Lebensdauer der Verwendungsgeschichtsdatensätze wie von einem Betreiber konfiguriert verwaltet und
    iii. Benutzerverfolgbarkeitssuchen durch eine webbasierte Benutzerschnittstelle (40) akzeptiert und sie interaktiv verarbeitet.

## Revendications

1. Procédé d'identification d'un utilisateur, en particulier le récepteur et/ou l'émetteur d'une unité de données d'utilisateur à laquelle un réseau d'accès a accédé sur la base d'un principe de partage de large bande, dans lequel un équipement local d'abonné comprend un routeur (10, 50), qui utilise le principe de partage de large bande en offrant un service d'accès à Internet destiné à être partagé par deux groupes d'utilisateurs, les membres du foyer auquel le routeur (10, 50) appartient et des utilisateurs publics, et dans lequel un fournisseur de services Internet (14) se charge de l'authentification de l'utilisation du foyer et dans lequel un fournisseur de services sans fil virtuel (16) se charge de l'authentification des utilisateurs publics, comprenant les étapes suivantes :

    a. l'authentification de l'utilisateur à un début d'une session d'utilisateur,
    b. l'attribution d'un identificateur de communication unique à un dispositif utilisateur de l'utilisateur qui est connecté au réseau d'accès, dans lequel le routeur (10, 50) fournit une traduction d'adresse réseau, dans lequel une adresse IP privée qui est attribuée à un dispositif utilisateur d'un utilisateur public et aux ports que ce dispositif utilisateur utilise est traduite en une adresse IP publique et des ports TCP/UDP partagés du routeur (10, 50) sur une interface de réseau étendu, et
    c. le stockage dans une base de données du fournisseur de services sans fil virtuel (16) de l'identificateur de communication unique, des informations relatives à l'utilisateur et à la session d'utilisateur,

dans lequel le routeur (10, 50) fournit un procédé de mappage à partir de l'adresse IP privée attribuée à un dispositif utilisateur de l'utilisateur public et de ports TCP/UDP utilisés par ce dispositif utilisateur, à une adresse IP publique attribuée au routeur (10, 50) et aux ports alloués à un utilisateur public, alors que l'adresse IP privée est attribuée par le routeur (10, 50) et l'adresse IP publique est attribuée par le fournisseur de services Internet (14), dans lequel l'ensemble de ports utilisé par l'utilisateur public est mappé à une plage de ports allouée à cet utilisateur public.

2. Procédé selon la revendication 1, comprenant en outre l'étape suivante :

d. l'exécution d'une recherche dans la base de données du fournisseur de services sans fil virtuel (16) déclenchée par une recherche de traçabilité d'utilisateur, en utilisant l'adresse d'origine ou de destination de l'unité de données d'utilisateur donnée, qui se rapporte à l'identificateur de communication unique du routeur (10, 50), auquel l'émetteur ou le récepteur de données, de manière correspondante, était relié durant la transmission de données, de manière à identifier l'utilisateur, en particulier respectivement l'émetteur ou le récepteur des données.

3. Procédé selon la revendication 1 ou 2, comprenant en outre les étapes suivantes :

e. la gestion automatique de la base de données du fournisseur de services sans fil virtuel (16) en supprimant des enregistrements d'historique d'utilisation, de préférence des enregistrements d'historique d'utilisation qui ne doivent pas être nécessairement conservés du point de vue légal.

4. Procédé selon l'une quelconque des revendications 1 à 3, dans lequel l'utilisateur contacte un équipement local d'abonné pour être authentifié, l'équipement local d'abonné contacte un serveur d'application (42) sur le réseau d'accès, le serveur d'authentification (42) vérifie des identifiants d'utilisateur avec des données stockées dans la base de données du fournisseur de services sans fil virtuel (16) et notifie à l'équipement local d'abonné d'octroyer l'accès à l'utilisateur si l'authentification est réussie.

5. Procédé selon l'une quelconque des revendications 1 à 4, dans lequel, selon le principe de partage de large bande IP, une adresse IP publique et une plage de ports sont attribués temporairement au dispositif utilisateur pour une session d'utilisateur.

6. Procédé selon l'une quelconque des revendications 1 à 5, dans lequel le serveur d'authentification (42) du fournisseur de services sans fil virtuel (16) stocke dans la base de données du fournisseur de services sans fil virtuel (16) l'identificateur de communication unique, le nom d'utilisateur, les identifiants d'utilisateur, le temps de début de session et le temps de fin de session chaque fois que l'utilisateur tente de s'authentifier ou termine une session d'utilisateur.

7. Procédé selon l'une quelconque des revendications 1 à 6, dans lequel le serveur d'authentification (42) stocke en outre dans la base de données de l'opérateur au moins une des données suivantes d'informations relatives à l'utilisateur et à la session :

i. des données sur un utilisateur, de préférence

a. des identifiants d'utilisateur, par exemple un identifiant de connexion utilisateur unique, une valeur de hachage du mot de passe d'utilisateur ou un certificat d'utilisateur, et

b. un nom complet d'utilisateur, et éventuellement

c. des données d'enregistrement d'utilisateur, par exemple une adresse physique,

ii. des données sur chaque session d'utilisateur, en particulier

a. la date et l'heure de début et de conclusion de ladite session d'utilisateur, et de préférence

b. des informations relatives à l'authentification, par exemple le type de mécanisme d'authentification utilisé,

c. une adresse MAC d'un dispositif sans fil utilisé pour accéder au réseau d'accès,

d. une adresse IP publique attribuée à l'équipement local d'abonné quand le dispositif utilisateur était rattaché durant une session particulière,

e. un port TCP/UDP et un temps durant lequel l'utilisateur a accédé au réseau et

f. une adresse IP privée attribuée au dispositif utilisateur durant ladite session particulière, et

iii. des données sur l'équipement local d'abonné, de préférence

a. des informations sur des caractéristiques statiques d'un routeur (10, 50) et son déploiement, par exemple un numéro de série de routeur,

b. une adresse MAC d'une interface sans fil du routeur (10, 50),

c. un emplacement physique de l'installation de routeur et

d. des informations sur le propriétaire du routeur (10, 50).

**8.** Procédé selon l'une quelconque des revendications 2 à 7, dans lequel une recherche de traçabilité d'utilisateur est déclenchée par l'opérateur du fournisseur de services sans fil virtuel (16) en utilisant au moins une des options suivantes :

i. des critères de recherche sont une adresse IP, un port TCP/UDP et un point temporel, auquel un paquet de données d'utilisateur a été transmis, fournissant comme résultats de recherche un nom d'utilisateur et des données d'utilisateur associées à ce nom d'utilisateur et éventuellement l'emplacement de l'équipement local d'abonné qui a été utilisé par l'utilisateur durant la période de temps donnée,

ii. d'autres critères de recherche sont un nom d'utilisateur et une période de temps, fournissant comme résultats de recherche tous les emplacements des équipements locaux d'abonné et les temps d'accès que l'utilisateur avec le nom donné a utilisés durant la période de temps donnée, et

iii. d'autres critères de recherche encore sont une adresse MAC et une période de temps, fournissant comme résultats de recherche tous les emplacements des équipements locaux d'abonné et les temps d'accès que l'utilisateur a utilisés avec un dispositif avec l'adresse MAC donnée durant la période de temps donnée.

**9.** Procédé selon l'une quelconque des revendications 1 à 8, dans lequel ledit fournisseur de services Internet (14) se charge en outre d'au moins une de l'autorisation et comptabilité de l'utilisation du foyer et dans lequel ledit fournisseur de services sans fil virtuel (16) se charge en outre d'au moins une de l'autorisation et comptabilité des utilisateurs publics.

**10.** Procédé selon l'une quelconque des revendications 2 à 9, dans lequel une autorité lance une recherche de traçabilité d'utilisateur en fournissant des critères de recherche comprenant au moins une des étapes suivantes :

i. le fait de contacter une autorité Internet, qui attribue des adresses à des organisations,

ii. le fait de contacter un fournisseur de services Internet (14) louant des adresses de réseau à ses abonnés, et

iii. le fait de contacter un fournisseur de services sans fil virtuel (16) gérant des adresses derrière un équipement local d'abonné.

**11.** Procédé selon l'une quelconque des revendications 3 à 10, dans lequel l'étape de suppression d'enregistrements d'historique d'utilisation est effectuée régulièrement, de préférence une fois par jour, dans lequel des enregistrements de session d'utilisateur qui sont plus anciens qu'une limite de temps donnée, qui peut être configurée par un opérateur, sont supprimés.

**12.** Système d'identification d'un utilisateur, en particulier le récepteur et/ou l'émetteur d'une unité de données d'utilisateur à laquelle un réseau d'accès a accédé sur la base d'un principe de partage de large bande, dans lequel un équipement local d'abonné comprend un routeur (10, 50), qui utilise le principe de partage de large bande en offrant un service d'accès à Internet destiné à être partagé par deux groupes d'utilisateurs, les membres du foyer auquel le routeur (10, 50) appartient et des utilisateurs publics, et dans lequel un fournisseur de services Internet (14) se charge de l'authentification de l'utilisation du foyer et dans lequel un fournisseur de services sans fil virtuel (16) se charge de l'authentification des utilisateurs publics, comprenant :

a. des moyens pour authentifier l'utilisateur à un début d'une session d'utilisateur,

b. des moyens pour attribuer un identificateur de communication unique à un dispositif utilisateur de l'utilisateur qui est connecté au réseau d'accès, dans lequel un routeur (10, 50) est adapté pour fournir une traduction d'adresse réseau, dans laquelle une adresse IP privée qui est attribuée à un dispositif utilisateur d'un utilisateur public et aux ports que ce dispositif utilisateur utilise est traduite en une adresse IP publique et des ports TCP/UDP partagés du routeur (10, 50) sur une interface de réseau étendu ; et

c. une base de données d'un fournisseur de services sans fil virtuel (16) pour stocker l'identificateur de communication unique, les informations relatives à l'utilisateur et à la session d'utilisateur,

dans lequel le routeur (10, 50) est adapté pour fournir un procédé de mappage à partir de l'adresse IP privée attribuée à un dispositif utilisateur de l'utilisateur public et de ports TCP/UDP utilisés par ce dispositif utilisateur, à une adresse IP publique attribuée au routeur (10, 50) et aux ports alloués à un utilisateur public, alors que l'adresse IP privée est attribuée par le routeur (10, 50) et l'adresse IP publique est attribuée par le fournisseur de services Internet (14), dans lequel l'ensemble de ports utilisé par l'utilisateur public est mappé à une plage de ports allouée à cet utilisateur public.

**13.** Système selon la revendication 12, comprenant en outre :

d. des moyens pour exécuter une recherche dans la base de données du fournisseur de services sans fil virtuel (16) déclenchée par une recherche de traçabilité d'utilisateur, en utilisant l'adresse d'origine ou de destination de l'unité de données d'utilisateur donnée, qui se rapporte à l'identificateur de communication unique du routeur (10, 50), auquel l'émetteur ou le récepteur de données, de manière correspondante, était relié durant la transmission de données, de manière à identifier l'utilisateur, en particulier respectivement l'émetteur ou le récepteur des données.

14. Système selon la revendication 12 ou 13, comprenant en outre :

e. des moyens pour gérer automatiquement la base de données du fournisseur de services sans fil virtuel (16) en supprimant des enregistrements d'historique d'utilisation, de préférence des enregistrements d'historique d'utilisation qui ne doivent pas être nécessairement conservés du point de vue légal.

15. Système selon l'une quelconque des revendications 12 à 14, comprenant un équipement local d'abonné que l'utilisateur contacte pour être authentifié, et dans lequel l'équipement local d'abonné contacte un serveur d'authentification (42) sur le réseau d'accès, le serveur d'authentification (42) vérifie des identifiants d'utilisateur avec des données stockées dans la base de données du fournisseur de services sans fil virtuel (16) et notifie à l'équipement local d'abonné d'octroyer l'accès à l'utilisateur si l'authentification est réussie.

16. Système selon l'une quelconque des revendications 12 à 15, dans lequel, selon le principe de partage de large bande IP, une adresse IP publique et une plage de ports sont attribués temporairement au dispositif utilisateur pour une session d'utilisateur.

17. Système selon l'une quelconque des revendications 12 à 16, dans lequel le serveur d'authentification (42) du fournisseur de services sans fil virtuel (16) stocke dans la base de données du fournisseur de services sans fil virtuel (16) l'identificateur de communication unique, le nom d'utilisateur, les identifiants d'utilisateur, le temps de début de session et le temps de fin de session chaque fois que l'utilisateur tente de s'authentifier ou termine une session d'utilisateur.

18. Système selon l'une quelconque des revendications 12 à 17, dans lequel le serveur d'authentification (42) du fournisseur de services sans fil virtuel (16) stocke en outre dans la base de données du fournisseur de services sans fil virtuel (16) au moins une des données suivantes d'informations relatives à l'utilisateur et à la session :

i. des données sur un utilisateur, de préférence

a. des identifiants d'utilisateur, par exemple un identifiant de connexion utilisateur unique, une valeur de hachage du mot de passe d'utilisateur ou un certificat d'utilisateur, et

b. un nom complet d'utilisateur, et éventuellement

c. des données d'enregistrement d'utilisateur, par exemple une adresse physique,

ii. des données sur chaque session d'utilisateur, en particulier

a. la date et l'heure de début et de conclusion de ladite session d'utilisateur, et de préférence

b. des informations relatives à l'authentification, par exemple le type de mécanisme d'authentification utilisé,

c. une adresse MAC d'un dispositif sans fil utilisé pour accéder au réseau d'accès,

d. une adresse IP publique attribuée à l'équipement local d'abonné quand le dispositif utilisateur était rattaché durant une session particulière,

e. un port TCP/UDP et un temps durant lequel l'utilisateur a accédé au réseau et

f. une adresse IP privée attribuée au dispositif utilisateur durant ladite session particulière, et

iii. des données sur l'équipement local d'abonné, de préférence

a. des informations sur des caractéristiques statiques d'un routeur (10, 50) et son déploiement, par exemple un numéro de série de routeur,

b. une adresse MAC d'une interface sans fil du routeur (10, 50),

c. un emplacement physique de l'installation de routeur et

d. des informations sur le propriétaire du routeur (10, 50).

19. Système selon l'une quelconque des revendications 15 à 18, dans lequel ledit fournisseur de services Internet (14) se charge en outre d'au moins une de l'autorisation et comptabilité de l'utilisation du foyer et dans lequel ledit fournisseur de services sans fil virtuel (16) se charge en outre d'au moins une de l'autorisation et comptabilité des utilisateurs publics.

20. Système selon l'une quelconque des revendications 12 à 19, comprenant des routeurs d'accès (10, 50) partagés par les membres d'un service Internet à large bande et des utilisateurs publics, un réseau d'accès et des composants logiciels et matériels nécessaires dans la partie dorsale en particulier pour supporter un procédé selon l'une quelconque des revendications 1 à 12, dans lequel le système

i. stocke de manière persistante les enregistrements d'historique d'utilisation pour une référence future,
ii. gère la durée de vie des enregistrements d'historique d'utilisation, telle que configurée par un opérateur, et
iii. accepte des recherches de traçabilité d'utilisateur par le biais d'une interface utilisateur basée sur le Web (40) et les traiter de manière interactive.

ISP subscriber domain

Public User

Public WLAN

10

Router

WAN

Private WLAN

ISP Subscriber

Internet

12

Virtual Wireless Service Provider domain

Authentication,
Authorization,
Accounting
for Public User

16

Internet Service Provider domain

Authentication,
Authorization,
Accounting
for ISP Subscriber

14

EP 2 051 473 B1

Figure 1:

TCP packet sent by a Public User incoming at the router over WLAN

| .... | 192.168.42.**5** | 1234 | 201.205.105.1 | 80 | .... | Packet Payload |

Src IP    Src port    Dst IP    Dst Port

| .... | 89.88.87.86 | 1501 | 201.205.105.1 | 80 | .... | Packet Payload |

TCP packet sent by a Public User outgoing from the router over WAN

**Details on the public user:**
Private user source IP and port: 192.168.42.5: 1234
Port range assigned: 1500-1599
Destination IP and port: 201.205.105.1:80

**System Parameters:**
BasePort: 1000
Port range size: 100
WAN IP: 89.88.87.86

Figure 2:

| Authority | IANA/RIR | ISP | VWSP |
|-----------|----------|-----|------|

IP Owner Ident Req →

← ISP

IP User Ident Req →

IP User Ident Req →

← User Details

← User Details

Figure 3:

Figure 4:

Figure 5:

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7181530 B
- US 7251733 A
- US 7089415 B
- US 7240364 B
- KR 20040110667
- KR 20040076037
- US 2006068799 A1
- WO 2006118497 A1

**Non-patent literature cited in the description**

- **ED. BERNSTEIN J ; SPETS T.** CPE WAN ManagementProtocol. *DSL Forum,* May 2004
- **ROSE M. ; MCCLOGHRIE K.** Structure and Identification of Management Information for TCP/IP-based Internets. *RFC 1155,* May 1990